# EUROPEAN PATENT APPLICATION

(11) **EP 3 875 252 A1**
(43) Date of publication of application: **08.09.2021**
(21) Application number: 20160597.9
(22) Date of filing: 03.03.2020
(51) Int. Cl.: B29C 64/209, B33Y 30/00, B29C 64/118

(54) **AN EXTRUSION PRINT HEAD FOR PRINTING A VISCOUS MATERIAL**

(71) Applicant: Nederlandse Organisatie voor toegepast- natuurwetenschappelijk Onderzoek TNO, 2595 DA 's-Gravenhage (NL)
(72) Inventor: Rijfers, Andries, 2595 DA 's-Gravenhage (NL); Brouwers, Leonardus Antonius Maria, 2595 DA 's-Gravenhage (NL); Verhoeven, Godefridus Hendrikus Willebrordus, 2595 DA 's-Gravenhage (NL)
(74) Representative: V.O.

(57) **Abstract**

An extrusion printer head (1) for printing a viscous material. The print head comprises a plurality of nozzles (5.1, 5.2). Each nozzle comprises a nozzle chamber (7) for collecting therein the viscous material. The print head also comprises a viscous material distributor (9) arranged for distributing a flow of viscous material to the plurality of nozzles (5.1, 5.2). The viscous material distributor comprises a channel (11) which defines therein, for each nozzle, a flow path which extends from an inlet (13) of the channel to the nozzle chamber (7) of the nozzle. The channel is structured such that the pressure drop over each of the defined flow paths is substantially equal.

## Description

The invention relates to an extrusion print head for printing a viscous material, wherein the print head comprises a plurality of nozzles, wherein each nozzle comprises a nozzle chamber for collecting therein the viscous material, and a viscous material distributor arranged for distributing a flow of viscous material to the plurality of nozzles.

Extrusion based additive manufacturing methods, such as but not limited to fused deposition modelling (FDM), provide a promising technique for making free-form products or with individually tailored recipes in the field of food and pharmaceuticals. With conventional printers upscaling techniques are tried in which multiple products are printed at once by using a plurality of nozzles per printer. Such printers however may however yield inconsistent products across the printing nozzles. Differences in product consistency may be of particular disadvantage to the pharmaceutical products. Spatial inconsistencies of a product may further also lead to a less than optimal use of a building surface of the printer where printed products will have to be printed apart from each other in lesser proximity as to prevent overlap between products.

Accordingly, it is an object of the invention to overcome some of the above mentioned disadvantages or at least provide an alternative. To this end according to a first aspect of the invention there is provided an extrusion print head characterized in that the viscous material distributor comprises a channel which defines therein, for each nozzle, a flow path which extends from an inlet of the channel to the nozzle chamber of the nozzle. The channel is structured such that the pressure drop over each of the defined flow paths is substantially equal. This allows the amount of material supplied to each nozzle to be consistently the same for each nozzle such which prevents differences in material availability per nozzle for printing. This increases the consistency of products that are printed simultaneously via a same printer head. The viscous material may here have a viscosity of 10·10³ - 70·10⁴ mPa·s at printing temperature. The material may be a polymer, a resin, a dough or another build material.

More specifically the channel may form a branching tree which branches out from the inlet towards the plurality of nozzles such that each of the defined flow paths ends at a separate single nozzle of the plurality of nozzles. Each flow path at least shares a first common branching node with all other flow paths of the defined flow paths. The channel may be designed such that each flow path is also equal in length. A benefit to this form of allows the homogeneous splitting of a material stream in ever smaller equally sized sub-streams. The channel may even branch out in stages such that each flow path at least shares a second common branching node with only some of the other flow paths of the defined flow paths. Optionally, each flow path passes through a same number of nodes. Further to the above at least the first common node may be designed as a tee (T-splitting). The bend for each path is arranged to have the same angle. This beneficially allows the system to account for pressure drop in the act of splitting the material stream in the node. Optionally, the channel is additionally formed such that branches of said channel of a same stage have a same inner geometry, such at least any one of length, roughness, inner diameter, branching bend, internal obstacles, and curvature. This allows a same average residence time of material and equalizes the flow, further increasing consistency of product.

Further to the first aspect of the invention the plurality of nozzles comprises at least a first and a second plurality of nozzles arranged for alternately printing and/or filling with respect to each other. The viscous material distributor is arranged to receive and process a continuous feed of viscous material by at least alternately filling the nozzle chambers of the first and second plurality of nozzles. This allows a continuous printing by means of the printing head by alternatingly filling one branch and printing with the other branch.

The viscous material distributor may further comprise a node-valve arranged for regulating the flow of viscous material through the first common branching node. The node-valve may in this option be able to assume either one of a first position, wherein the viscous material is only supplied to the first plurality of nozzles for the filling of the nozzle chambers, and a second position, wherein the viscous material is only supplied to the second plurality of nozzles for the filling of the nozzle chambers. A benefit is that this allows for the alternation to occur in a centralized manner instead of nozzle specific. Also a benefit is that the material supply pressure doesn't interfere with the printing operation. This valve may be rotary in that it is rotatable into at least either one of these positions and optionally a third position through a programmable direction of rotation. This is beneficial in that it provides programming advantages in which the frequency of rotation of the valve may be aligned with printing duration of a product. The material distributor further comprises a diversion channel (21) connecting to the first common branching node. The node-valve is further arranged such that it is able to assume a third position in which the flow is diverted away from the nozzles, such as to a waste collection area. This allows the printer head to receive material continuously, also when the printed is momentarily unable to process the material supply.

Further to the above each of the plurality of nozzles may comprise a piston by which means said nozzle is actuatable for expelling the viscous material from the respective nozzle chamber of the nozzle for printing. The first plurality of nozzles is actuated through a first common actuator, and the second plurality of nozzles is actuated through a second common actuator. The first and second common actuators are independently operable, optionally in sequence. Collective actuation reduces discrepancies that would otherwise arise due to individual actuation and in this manner collective actuation facilitates a continuous printing operation.

Optionally each nozzle comprises an outlet valve, which is arranged for assuming either one of a closed position to allow for the filling of the nozzle chamber, while preventing printing, and an open position to allow material to be expelled from the nozzle for printing. This prevents nozzles from expelling material during filling operations, such as through leaking.

Nozzles may also experience clogging issues or other irregularities. In such an event it may be beneficial to close off an affected cluster of nozzles from the channel of the distributor. As such, the viscous material distributor may comprise a containment valve arranged for regulating the flow of viscous material through the second common branching node. The containment valve is able to assume either one of an open position wherein material is allowed to flow to each nozzle of the plurality of nozzles which is downstream of the second common branching node, and a closed position wherein material is prevented from flowing to each nozzle of the plurality of nozzles which is downstream of the second common branching node. This prevents fluid interaction between nozzles through back pressure, also known as cross talking. This may cause the material to have a preferential pathway among the plurality of pathways corresponding to the cluster of nozzles.

In some embodiments, each of the plurality of nozzles comprises a piston by which means said nozzle is actuatable for expelling the viscous material from the respective valve chamber of the nozzle for printing, wherein each nozzle comprises a fill path extending between the channel and a part the nozzle chamber, wherein said part of the nozzle chamber is located underneath an ultimate position of the piston during printing. In these embodiments, the nozzle chamber may advantageously be filled in such a manner that air trapping through the nozzle outlet is prevented. For example, the outlet valve may be closed and the containment valve may be opened, and material may be forced into the nozzle chamber via the fill path.

Temperature significantly impacts the viscosity of the material being printed. It may therefore be beneficial to create a consistent temperature across the nozzles, as well as throughout the entire distributor. Accordingly, each nozzle of the plurality of nozzles may comprise temperature control means, such as a temperature sensor and heating element, for providing a substantially same temperature across the plurality of nozzles.

In this printer head there is a focus on volume controlled printing rather than pressure controlled printing. To this end the printer head may comprise a pump means or is connected to a pump means, such that the material is supplied to the distributor at a pressure head by said pump which is insufficient to enable, by means of said pressure head alone, printing operations with the viscous material, and sufficient for filling the nozzle chamber of each nozzle of the plurality of nozzles. A benefit is increased control over volume deposition of material during printing with the combined ability to print continuously.

Due to higher spatial consistency in products the nozzles may be grouped close together to further increase the printing surface efficiency. To this end the first plurality of nozzles (5.1) and the second plurality of nozzles (5.2) each have an N number of nozzles, wherein the nozzle density for the first plurality of nozzles and the second plurality of nozzles may be up to 5.0 1/cm². The desired nozzle density will be determined by the desired maximum dimensions of the product to be printed. For a product of size 10^{∗}10 centimeter, a nozzle density of 0.1 nozzles per square centimeter (1/cm²) is sufficient. For smaller products the density is higher, e.g. for a 1^{∗}1 centimeter product, the size may be 1.0 1/cm². Using the present invention, the achievable density may be up to 5.0 1/cm².

According to a second aspect of the invention there is provided a fused deposition modeling printer comprising a printer head according to the first aspect of the invention.

Further advantageous aspects of the invention will become clear from the appended description and in reference to the accompanying drawings, in which:
Figure 1 shows a spatial view of the printing head according to the invention;
Figure 2 shows a spatial view of a part of the printing head;
Figure 3 shows schematic top down view of the material distributor of the printing head;
Figure 4 shows a schematic cross-sectional view of a nozzle of the printing head;
Figure 5 shows a schematic flow diagram of the flow paths of as defined by the channel of the material distributor;
Figures 6-8; shows a schematic cross-sectional top down view of a node-valve in various rotational settings;
Figure 9 shows a schematic view of a printer comprising the print head according to the invention;
Figures 10A and 10B schematically illustrate cross-sections along the line A-A in figure 4 in accordance with an embodiment; and
Figures 11A and 11B schematically illustrate cross-sections along the line A-A in figure 4 in accordance with a further embodiment.

### DETAILED DESCRIPTION

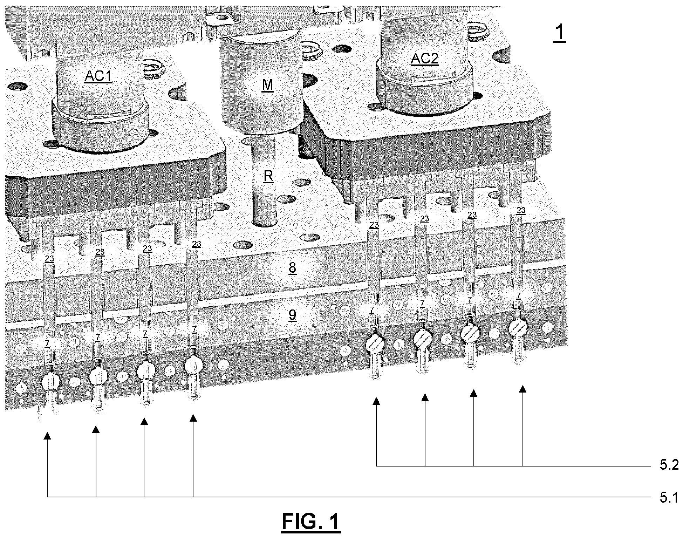

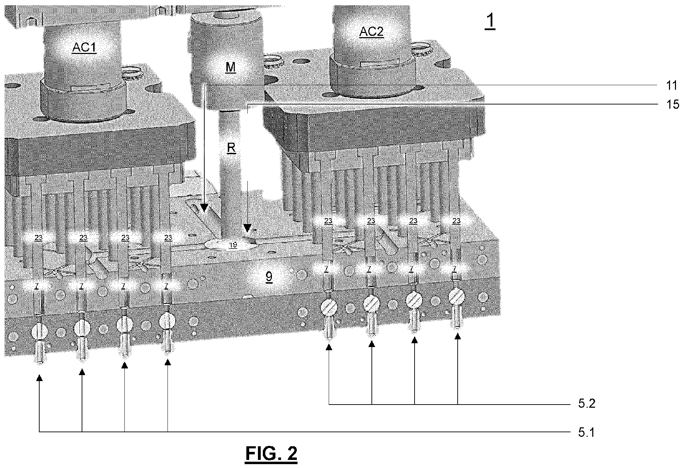

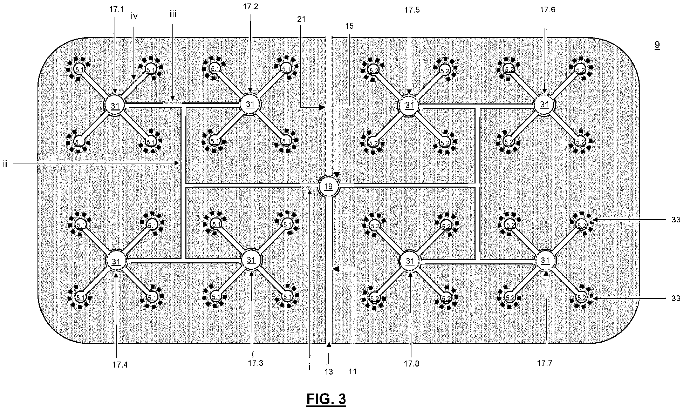

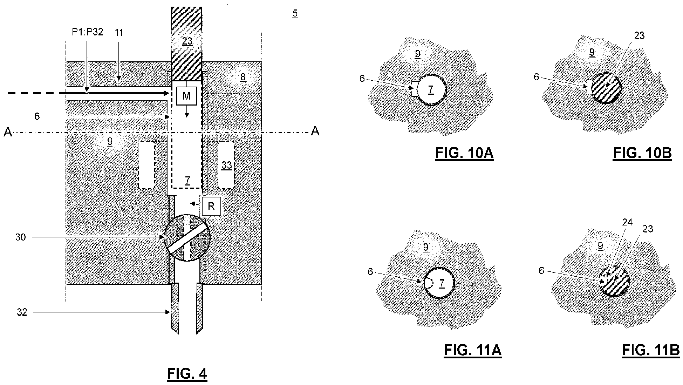

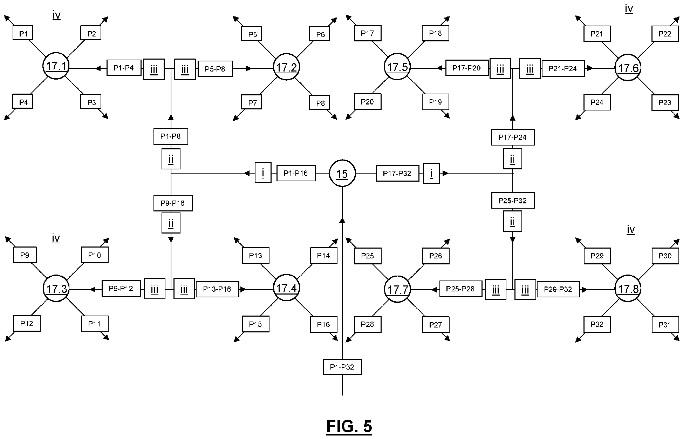

The invention shows in Figure 1 an extrusion print head 1 for printing a viscous material. This viscous material is in this example a carrier for a medicine, such as but not restricted to PEG,PVA, PVP, a food product such as uncooked or partially cooked dough, or a known FDM polymer with a viscosity of 1 Pa·s - 1 kPa·s at room temperature. The invention is not limited to fused deposition modelling (FDM), but may be applied to any kind of extrusion based additive manufacturing technology. The printer head has a plurality of nozzles 5.1, 5.2 which can be seen in Figures 1 and 2. The printer head 1 further has a viscous material distributor 9 arranged for distributing a flow of viscous material to the plurality of nozzles 5.1, 5.2. One of the nozzles 5 of the plurality of nozzles 5.1, 5.2 can be seen more in detail in Figure 4 and shows that the nozzle 5 has a nozzle chamber 7 for collecting therein the viscous material. The nozzle 5 shown in Figure 4 is representative of all nozzles 5.1, 5.2 in accordance with an embodiment. The viscous material distributor 9 has a channel 11 which defines therein, for each nozzle, a flow path, namely one of P1-P32 (P1:P32), which extends from an inlet 13 of the channel to the nozzle chamber 7 of the nozzle. In Figure 2 a cover 8 part of the material distributor is removed to show the channel 11. In Figure 3 a schematic top view of the material distributor 9 shows a possible manner in which the channel 11 is structured. The channel is structured such that the pressure drop over each of the defined flow paths P1-P32 is substantially equal. The manner in which the channel 11 as shown in Figure 3 defines the flow paths P1-P32 is shown in Figure 5. Figures 3 and 5 illustrate an embodiment having 2^{∗}16 nozzles. The skilled person may appreciate that the invention is not limited to this number of nozzles. For example, the invention may be applied to provide a total of 64, 128, 256, 512 or even 1024 nozzles.

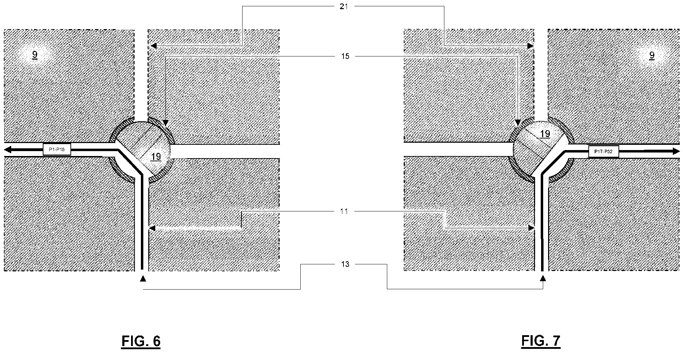

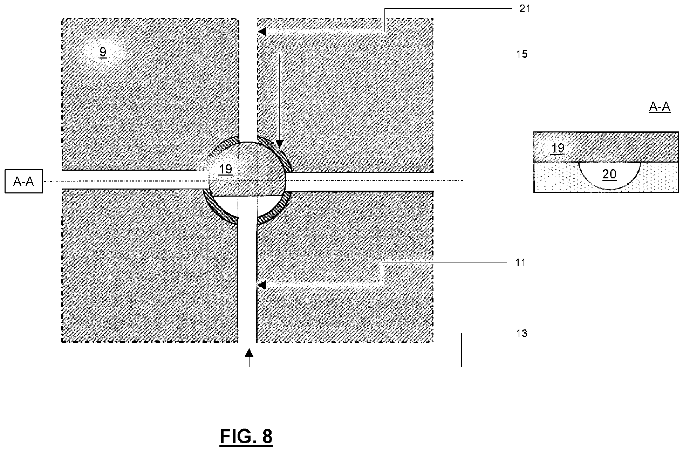

Figure 3 shows that the channel 11 branches out, much like a tree, from the inlet 13 towards the plurality of nozzles 5.1, 5.2 such that each of the defined flow paths P1-P32 ends at a separate single nozzle of the plurality of nozzles. In this example 32 flow paths are defined by the channel 11, namely P1-P32. However, it stands to reason that the channel may be structured otherwise such that are more or fewer flow paths and that alternative branching structures may also be use. Further to this example a first common branching node 15 can be identified which is basically, the most upstream point in the channel 11 wherein the channel becomes branched splitting into a plurality of directions downstream thereof. In Figure 3 it is shown that the splitting of the channel 11 through this first common node 15 divides the plurality of nozzles between a first plurality 5.1 and a second plurality of nozzles 5.2, each of these two pluralities being arranged at a downstream end of the channel at a mutually different branches as seen from the first common node 15. In this example, but entirely optional, the first node is arranged such as to have a node-valve 19, arranged for regulating the flow of viscous material through the first common branching node 15. The node-valve 19 can be valve that is able to assume either one of a first position, wherein the viscous material is only supplied to the first plurality of nozzles 5.1 for the filling of the nozzle chambers thereof, and a second position, wherein the viscous material is only supplied to the second plurality of nozzles 5.2 for the filling of the nozzle chambers thereof. This allows the sequential use of the first and second plurality if nozzles, such that the printer head can print continuously. As one of the pluralities of nozzles is filled, the other plurality can be closed off from the material supply such as during the act of printing itself. The node-valve 19 is shown to be a three-way valve in Figures 6 and 7. However, other forms of the valve are also possible. In Figure 6 the node-valve 19 assumes the first position, and in Figure 7 the node-valve 19 assumes the second position. The node valve is in this example shown to be able to rotate into either position via an actuation rod R that is connected to an electronic motor M as controlled by a printer, as can be seen from Figure 2. The material distributor 9 may further comprise a diversion channel 21, as seen from Figure 3. It is noted that all optional element are indicated in Figure 3 with a dashed structure, as such -----. It shall therefor be understood that the diversion channel 21 too is merely optional to the material distributor 9. In this example the diversion channel 21 extends from the first common branching node to a diversion volume, such as a waste receptacle (not shown, but customary). Should such a diversion channel be present then the node-valve 19 can be structured such that it is able to assume either one of a first position to the same end as previously described, a second position to the same end as previously described and an additional third position in which the flow is diverted away from the nozzles 5.1, 5.2 via the diversion channel 21. To this end the valve may be provided with a cavity 20 for only connecting the diversion channel 21 to the channel 11, and only when the node-valve 19 is in the third position. This eventuality is shown more clearly in Figure 8. The cavity 20 can be seen in cross-section A-A of the node valve 19. The first plurality of nozzles and the second plurality of nozzles each consist of an N number of nozzles, wherein N is 4 by 4, making 16, as shown in Figures 1, 2 and 3. However, N may also be any other number. The nozzle density for the first plurality of nozzles and the second plurality of nozzles can be efficiently matched with the xy dimensions of the plurality of printed products, e.g. up to 5.0 1/cm².

Figure 3 also shows that the channel branches out in stages such that each flow path at least shares a second common branching node 17.1-17.8 with only some of the other flow paths of the defined flow paths. More specifically it can be seen that flow path P1 for example shares second common branching node 17.1 only with flow paths P2-P4. Further common branching nodes are not emphasized by reference numbers, but can be seen as the point wherein the channel 11 branches into a further stage. In Figures 3 and 5 the stage of branching is indicated with roman numerals i, ii, iii, and iv. The stage of branching is indicative of the number of nodes that have to be passed by a flow path in the channel from the inlet 13 to reach to that particular stage. Figure 5 shows that each flow path passes through a same number of nodes, in this example four. The channel 11 is formed such that branches of said channel of a same stage have a same inner geometry, in particular the same length, roughness and inner diameter. In this example the channel has over a same stage the same volume and is not provided with inner obstacles. Additionally, but also separately from this example, and in accordance with any embodiment of the invention, the channel splits and bends a material flow such that the same pressure loss is incurred over each of the flow paths passing through a particular node wherein such splitting occurs, such as the first and second nodes 15, 17.1-17.8. It can additionally be understood that, each node, such as a first and second node, is designed such that a flow passing there through is split into a plurality of flows as each of the first and second nodes herein define a point of branching of the channel 11.Each of the plurality of split flows is bent with a same angle from the flow from which it is split, and over a same distance with a same sharpness, such that the pressure drop remains the same for all flow paths passing through the node.

Each of the second common branching nodes 17.1-17.8 of the distributor 9 is provided with a containment valve 31 arranged for regulating the flow of viscous material through its respective second common branching node. This can also be seen in Figure 3. The containment valve 31 is able to assume either one of an open position wherein material is allowed to flow to each nozzle of the plurality of nozzles which is downstream of the respective second common branching node, a closed position wherein material is prevented from flowing to each nozzle of the plurality of nozzles which is downstream of the respective second common branching node. This allows a specific sub-set of nozzles to be prevented from fluidly communicating with other nozzles via the channel 11. Such as to prevent what is termed "cross-talking" between nozzles, which is an interaction between nozzles through back pressure which may be caused by clogging of a nozzle. The containment valve 31 may also be used during printing, in particular during actuation of the pistons 23 in each nozzle. This will be explained further below.

Printing specifically occurs through the emptying of the nozzle chamber 7 of a nozzle 5.1, 5.2 by moving a 23 piston thereof into the nozzle chamber. The piston is basically a plunger rod which is used to sever the fluid connection of the chamber 7 with the channel 11 as it is presses down into the chamber. In Figure 4 the downward movement M of the piston is illustrated. The dotted outline ---- shown in Figure 4 represents the piston outline in a position wherein it has moved all the way down into the nozzle chamber 7 having expelled all material out of the chamber 7. In such a situation, the act of printing has already been performed. Any material in the chamber is expelled through a nozzle outlet 32, such as via an outlet valve 30 in a position that so allows it (as indicated by the dotted position of valve 30). The pistons of each of the first plurality of nozzles 5.1 are further actuatable through a first common actuator AC1. This can be seen in Figures 1 and 2. Similarly, the pistons of the second plurality of nozzles 5.2 are actuated through a second common actuator AC2, wherein the first and second common actuators AC1, AC2 are independently operable, such as in sequence. This is further to sequential printing, wherein the supply of material can be prevented to the first plurality of nozzles when printing with the first plurality of nozzles by means of the first node-valve 19 assuming a position in which the flow paths to the first plurality of nozzles are interrupted, and wherein the material flows to the second plurality of nozzles 5.2 for the filling of the respective valve chambers. Further to the above, the supply of material can be prevented to the second plurality of nozzles when printing with the second plurality of nozzles by means of the first node-valve 19 assuming a position in which the flow paths to the second plurality of nozzles are interrupted, and wherein the material flows through the distributor to the first plurality of nozzles 5.2 for the filling of the respective valve chambers. The material distributor is arranged for handling and printing the viscous material having a viscosity of 2·10³ - 50·10³ Pa·s at a temperature in the range of 0-250 degrees Celsius.

The printer head is in this example connected to a material supply which supplies the viscous material to the distributor 9. The material supply can be, but is not restricted to a conventional pump or extruder and can be comprised in the printing head, but is not shown. The material supply is however arranged to supply the material to the distributor at a pressure which is insufficient to enable, by means of said pressure alone, printing operations with the viscous material. The material supply is merely arranged such that the pressure with which it supplies the viscous material to the distributor is sufficient for overcoming the pressure drop caused by the channel 11 of the distributor 9 and for filling the nozzle chamber 7 of each nozzle of either of the plurality of nozzles 5.1, 5.2.

Figure 4 also shows that any nozzle of the printer head comprises an outlet valve 30, which is arranged for assuming either one of a closed position to allow for the filling of the nozzle chamber, while preventing printing, and an open position to allow material to be expelled from the nozzle for printing. The outlet valve is shown to be in the closed position in Figure 4. The valve is rotatable in direction R for assuming the open position as indicated with the dashed lines -----. However, other valve types are also possible.

During filling of the nozzle chambers 7 of each nozzle, the outlet valves 30 of each nozzle being filled are closed, while the containment valve 31 is in an open position. Material is supplied via channel 11. As will be appreciated, the filling of the chamber 7 of each nozzle commences subsequent to the printing. This is when the piston 23 is in the downward position as illustrated by the dashed ---- line in figure 4. To allow filling, in some embodiments, a fill channel or fill path 6 may be present between the piston 23 and the walls of chamber 7. Alternatively or additionally, in other embodiments, the piston 23 may include such a fill channel 6. In yet other embodiments, play between the piston 23 and the walls of the nozzle chamber 7 may be sufficient to form a fill path, e.g. to allow supply of build material under pressure. To further illustrate the embodiments that include a fill channel 6, figures 10A, 10B, 11A and 11B show two different embodiments in a cross-section along the line A-A of figure 4. For example, figure 10A shows an embodiment wherein a fill channel 6 has been included in the wall of nozzle chamber 7. Figure 10B is the situation for the embodiment of figure 10A but with the piston 23 in the downward position. Figure 11A shows an embodiment wherein a fill channel 6 has been included in the piston 23. In this figure, the outline of the piston 23 which is in the upward position is illustrated by a dashed ---- line. Figure 11B is the situation for the embodiment of figure 11A but with the piston 23 in the downward position. A fill channel 6 has been included in the piston 23.

To fill the chamber 7, as stated, outlet valve 30 will be closed and containment valve 31 is opened. The pressurized material is supplied via channel 11 and through fill channel 6. As a result, pressure builds up underneath the piston 23 pushing the piston 23 upwards, thereby filling up the nozzle chamber 7. Alternatively, the pistons 23 may be pulled upward by an actuator (e.g. any of the actuators AC1 or AC2) to create a low pressure area in the nozzle chamber 7, such as pull material into the chamber 7 by means of suction. An advantage thereof is that the filling of the chamber may be achieved without inadvertent air trapping, e.g. by in-pull of air through the nozzle outlet 32.

It can also be seen in Figure 4 that each nozzle of the plurality of nozzles optionally has a temperature control means 33, which is in this example a temperature sensor and heating element, for providing a substantially same temperature across all nozzles of the printing head 5.1, 5.2.

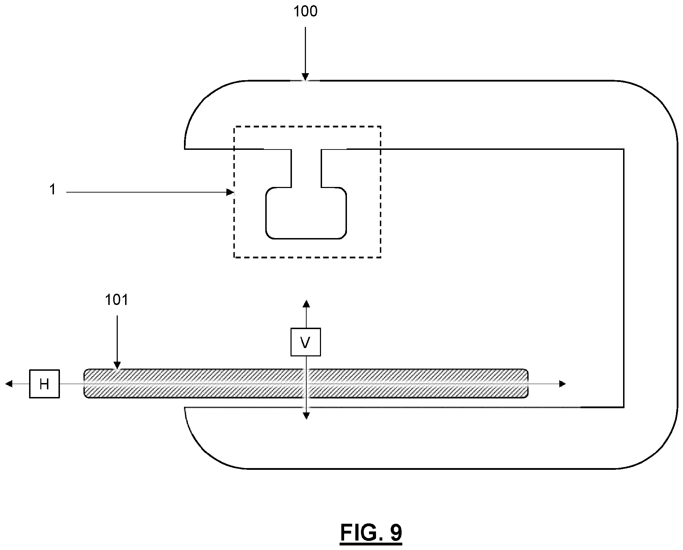

Figure 9 shows a schematic drawing of the fused deposition modeling printer 100 having the printer head 1 as discussed herein above. In this example the printer has a printing surface 101 which is horizontally H (xy) and vertically V (z) moveable with respect to the printer head 1. Optionally, the printing surface is a conveyor surface, such as a continuous belt, which movement is coordinated with printing.

## Claims

1. An extrusion print head (1) for printing a viscous material, wherein the print head comprises:
- a plurality of nozzles (5.1, 5.2), wherein each nozzle comprises a nozzle chamber (7) for collecting therein the viscous material;
- a viscous material distributor (9) arranged for distributing a flow of viscous material to the plurality of nozzles,
**characterized in that** the viscous material distributor (9) comprises a channel (11) which defines therein, for each nozzle, a flow path which extends from an inlet (13) of the channel to the nozzle chamber (7) of the nozzle, wherein the channel is structured such that the pressure drop over each of the defined flow paths is substantially equal.

2. The print head according to at least claim 1, wherein the channel (11) forms a branching tree which branches out from the inlet (13) towards the plurality of nozzles (5.1, 5.2) such that each of the defined flow paths ends at a separate single nozzle of the plurality of nozzles, and wherein each flow path at least shares a first common branching node (15) with all other flow paths of the defined flow paths.

3. The print head according to at least claim 2, wherein the channel branches out in stages such that each flow path at least shares a second common branching node (17.1-17.8) with only some of the other flow paths of the defined flow paths, and wherein optionally, each flow path passes through a same number of nodes.

4. The print head according to at least claim 3, wherein the channel (11) is formed such that branches of said channel of a same stage have a same inner geometry, such at least any one of length, roughness, inner diameter, branching bend, internal obstacles, and curvature.

5. The print head according to any of claims 1-4, wherein the plurality of nozzles (5.1, 5.2) comprises at least a first (5.1) and a second plurality (5.2) of nozzles arranged for alternately printing and/or filling with respect to each other, and wherein the viscous material distributor is arranged to receive and process a continuous feed of viscous material by at least alternately filling the nozzle chambers of the first and second plurality of nozzles.

6. The print head according to at least claim 2 and 5, wherein the viscous material distributor comprises a node-valve (19) arranged for regulating the flow of viscous material through the first common branching node (15), wherein the node-valve (19) is able to assume either one of
a first position, wherein the viscous material is only supplied to the first plurality of nozzles for the filling of the nozzle chambers, and
a second position, wherein the viscous material is only supplied to the second plurality of nozzles for the filling of the nozzle chambers.

7. The print head according to at least claim 6, wherein the material distributor (9) further comprises a diversion channel (21) connecting to the first common branching node (15) and wherein the node-valve (19) is further arranged such that it is able to assume a third position in which the flow is diverted away from the nozzles, such as to a waste collection area.

8. The print head according to at least claim 6 or 7, wherein each of the plurality of nozzles (5.1, 5.2) comprises a piston (23) by which means said nozzle is actuatable for expelling the viscous material from the respective valve chamber (7) of the nozzle for printing, and wherein the first plurality of nozzles (5.1) is actuated through a first common actuator (AC1), and the second plurality of nozzles (5.2) is actuated through a second common actuator (AC2), wherein the first and second common actuators (AC1, AC2) are independently operable, optionally in sequence.

9. The print head according to any of the preceding claims, wherein each nozzle (5.1, 5.2) comprises an outlet valve (30), which is arranged for assuming either one of
a closed position to allow for the filling of the nozzle chamber, while preventing printing, and
an open position to allow material to be expelled from the nozzle for printing.

10. The print head according to any of the preceding claims, wherein the viscous material distributor (9) comprises a containment valve (31) arranged for regulating the flow of viscous material through a common branching node (17.1-17.8), wherein the containment valve is able to assume either one of
an open position wherein material is allowed to flow to each nozzle of the plurality of nozzles which is downstream of the common branching node; and
a closed position wherein material is prevented from flowing to each nozzle of the plurality of nozzles which is downstream of the common branching node.

11. The print head according to claims 9 and 10, wherein each of the plurality of nozzles (5.1, 5.2) comprises a piston (23) by which means said nozzle is actuatable for expelling the viscous material from the respective valve chamber (7) of the nozzle for printing, wherein each nozzle (5.1, 5.2) comprises a fill path (6) extending between the channel (11) and a part the nozzle chamber (7), wherein said part of the nozzle chamber (7) is located underneath an ultimate position of the piston (23) during printing.

12. The print head according to any of the preceding claims, wherein each nozzle of the plurality of nozzles (5.1, 5.2) comprises temperature control means (33), such as a temperature sensor and heating element, for providing a substantially same temperature across the plurality of nozzles.

13. The print head according to any of the preceding claims, wherein the print head comprises a pump means or is connected to a pump means, such that the material is supplied to the distributor at a pressure head by said pump which is insufficient to enable, by means of said pressure head alone, printing operations with the viscous material, and sufficient for filling the valve chamber of each valve of the plurality of valves.

14. The print head according to at least claim 5, wherein the first plurality of nozzles (5.1) and the second plurality of nozzles (5.2) each have an N number of nozzles, wherein the nozzle density for the first plurality of nozzles and the second plurality of nozzles N/cm².

15. The print head according to any of the preceding claims, wherein the printer is arranged for handling and printing the viscous material having a viscosity of 2·10³ - 50·10³ Pa·s.
